# EUROPEAN PATENT SPECIFICATION

(11) **EP 2 199 802 B1**
(45) Date of publication and mention of the grant of the patent: **02.08.2017**
(21) Application number: 09708014.7
(22) Date of filing: 07.02.2009
(51) Int. Cl.: G01N 35/02, C12M 1/00, G01N 1/10

(54) **CONTAINER AND USE THEREOF IN AN ANALYSIS**
BEHÄLTER UND DESSEN VERWENDUNG FÜR ANALYSE
CONTENANT ET SON UTILISATION DANS UNE ANALYSE

(30) Priority: 07.02.2008 JP 2008027392
(43) Date of publication of application: 23.06.2010
(73) Proprietor: ARKRAY, Inc., Minami-ku Kyoto-shi Kyoto 601-8045 (JP)
(72) Inventor: FURUSATO, Noriaki, Kyoto-shi Kyoto 601-8045 (JP)
(74) Representative: MacDougall, Alan John Shaw
(86) International application number: PCT/JP2009/052119
(87) International publication number: WO 2009/099223

(56) References cited:
- EP-A2- 0 622 623
- EP-A2- 0 901 826
- WO-A1-2007/015526
- JP-A- 4 117 275
- JP-A- 51 146 981
- JP-A- 2006 189 346
- US-A- 3 603 471
- US-A- 4 395 382
- US-A1- 2006 057 033

## Description

### Technical Field

The present invention relates to a vessel and an analysis vessel using the same.

### Background Art

Conventionally, in an analysis using a physical and chemical analysis apparatus, a medical analysis apparatus, and the like, a vessel that stores an object to be analyzed has been used. In order to prevent deterioration in the analysis accuracy due to evaporation and dispersion of a sample in a vessel during an analysis, the vessel is required to be sealed in an air-tight and liquid-tight manner. Therefore, in conventionally used vessels, for example, a screw cap structure and a fit-in structure (for example, Patent Document 1) are used. The screw cap structure is provided with a packing and the fit-in structure uses flexibility of resin. Accordingly, conventional vessels require operations of removing a cover, moving the thus removed cover elsewhere, reattaching the removed cover, and the like at the time of opening and closing the vessels.

In contrast, in a field of the physical and chemical analysis, the medical analysis, and the like, the development of an autoanalyzer in which the whole series of measurement operation is automated is desired. However, in a case where a conventional vessel is used, an autoanalyzer requires a mechanism for operating an opening and closing of the vessel. In addition, it requires operation accuracy such as positioning at the time of fitting a cover into a vessel body. Therefore, with respect to the autoanalyzer, the number of apparatus mechanisms is increased, the apparatus thus is complicated, and the size of the apparatus itself is also increased.

Patent Document 1: JP4(1992)-31945

Further background art is provided in EP 0 622 623 A2, WO 2007/015526 A1 and JP 2006 189346 A.

EP 0 622 623 A2 discloses a method and apparatus for sampling liquids containing volatile materials, wherein the liquid is pumped through a syringe needle into a container until the container overflows. The needle is removed slowly and the container is automatically closed as the needle is withdrawn, wherein liquid flows upwardly continuously as the needle is withdrawn through an opening. The cap for the container includes a closure having a valve opening extending upwardly and sized to narrowly receive a syringe in a perpendicular valve member opening. The valve member includes a flat member on one end adapted to be gripped by a cam follower for opening and closing of the valve opening in coordination with the movement of the syringe.

WO 2007/015526 A1 discloses a cover structure for opening and closing an opening at the upper part of a container for reagent. The cover structure comprises an outer cover member having a first opening part corresponding to the opening, an inner cover member having a second opening part facing the first opening part and disposed so as to be vertically movable relative to the outer cover member, and a rotary drum having a through hole and engaged with the outer cover member and the inner cover member through an engagement means rotatable about its horizontal axis. The engagement means allows the rotary drum to rotate when the inner cover member is opened to communicate the first opening part with the second opening part through the through hole so as to bring the opening in an opened state, and when the inner cover member is closed, allows the rotary drum to rotate to release the state of the communication of the first opening part with the second opening part so as to bring the opening into a closed state.

JP 2006 189346 A discloses a chemical liquid container equipped with a container body for storing the chemical liquid and an on/off mechanism for opening and closing the opening part provided so as to permit the insertion of a pipette, in order to suck the chemical liquid in the container body. The on/off mechanism is equipped with the valve body housed in the housing part, provided to the inner surface of the opening part and rotatable about the axial line crossing the axial line of the opening part at right angles to open and close the opening part, corresponding to an angle position and to the operation part that pierces the sidewall of the housing part to be connected to the valve body.

### Disclosure of Invention

Hence, the present invention is intended to provide a vessel easily capable of being opened and closed without detaching and attaching a cover and easily applicable to an autoanalyzer.

The present invention is a vessel as defined in Claim 1 of the appended claims. Also provided is the use of such a vessel in an analysis.

In order to achieve the aforementioned object, the vessel of the present invention is a vessel that includes:
a vessel body; and
a cover body, wherein
the vessel body includes:
   a vessel main body being tubular and having an upper open-end and a lower closed-end; and
   a cover body containing portion being tubular and having at least one open-end,
the cover body containing portion is at the upper open-end of the vessel main body and the vessel main body and the cover body containing portion are arranged such that an axial direction of the vessel main body is approximately perpendicular to an axial direction of the cover body containing portion,
an inside of the vessel main body is in communication with an inside of the cover body containing portion through the upper open-end,
an opening portion is provided at a side wall of the cover body containing portion over the upper open-end of the vessel main body,
the cover body is columnar and has a through-hole in a direction perpendicular to an axial direction of the column, and a sealing portion at a position shifted from an opening of the through-hole in a peripheral direction,
the cover body is coaxially and rotatably containable in an inside of the cover body containing portion in a condition where an outer peripheral surface of the cover body is in contact with an inner peripheral surface of the cover body containing portion,
the through-hole of the cover body is at a position corresponding to the side wall opening portion of the cover body containing portion and the upper open-end of the vessel main body in a condition where the cover body is contained in the cover body containing portion,
in a condition where the cover body is contained in the cover body containing portion, when the cover body is rotated and one end of the through-hole is placed below the side wall opening portion and the other end of the through-hole is placed above the upper open-end of the vessel main body, the inside of the vessel main body is communicated with the side wall opening portion through the through-hole, and
when the cover body is rotated and the sealing portion is placed over the upper open-end of the vessel main body, the inside of the vessel main body is sealed from the outside.

Since the vessel of the present invention can perform opening and closing by rotating a cover body, the vessel can be opened and closed easily without detaching and attaching a cover. Therefore, the vessel is easily applicable to an autoanalyzer and is excellent in sealing ability. Further, when the vessel of the present invention is applied to an autoanalyzer, the vessel requires neither a means for moving a cover nor a high positioning accuracy. Therefore, opening and closing of the vessel can be performed with a simple mechanism.

### Brief Description of Drawings

[FIG. 1] FIG. 1 is an exploded perspective view of a cover body and a vessel body in an example of a vessel.
[FIG. 2] FIG. 2 is a perspective view of an example of a vessel.
[FIG. 3] FIG. 3 (A) is a cross-sectional view of an example of a vessel in a cover-opened state. FIG. 3 (B) is a cross-sectional view of an example of a vessel in a cover-sealed state.
[FIG. 4] FIG. 4 (A) is a cross-sectional view of a vessel body in an example of a vessel. FIG. 4 (B) is a cross-sectional view of a cover body in an example of a vessel.
[FIG. 5] FIG. 5 (A) is a side view of an example of a vessel body. FIG. 5 (B) is a side view of another example of a vessel body.
[FIG. 6] FIG. 6 is an exploded perspective view of a cover body and a vessel body in another example of a vessel.
[FIG. 7] FIG. 7 is a perspective view of another example of a vessel.
[FIG. 8] FIG. 8 is an exploded perspective view of a cover body and a vessel body in an example of a vessel of the present invention.
[FIG. 9] FIG. 9 is a perspective view of another example of the vessel of the present invention.
[FIG. 10] FIG. 10 is a top view of a vessel showing a process of opening and closing in yet another example of the vessel of the present invention. FIG. 10 (A) is a top view of the vessel in a cover-opened state. FIG. 10 (B) is a top view of the vessel in a state of transferring from a cover-opened state to a cover-sealed state. FIG. 10 (C) is a top view of the vessel in a cover-sealed state.
[FIG. 11] FIG. 11 is a schematic view showing a relationship between an opening and closing recognizing portion of a cover body and a recognizing mechanism of an autoanalyzer in yet another example of the vessel of the present invention. FIG 11 (A) is a schematic view in a state where a cover is recognized to be opened. FIG. 11 (B) is a schematic view in a state where the cover is recognized to be sealed.
[FIG. 12] FIG. 12 is an exploded perspective view of a cover body and a vessel body in yet another example of a vessel.
[FIG. 13] FIG. 13 is a perspective view of yet another example of a vessel.
[FIG. 14] FIG. 14 is an exploded perspective view of a cover body and an O ring to be attached in yet another example of a vessel.
[FIG. 15] FIG. 15 (A) is a cross-sectional view of yet another example of a vessel in a cover-opened state. FIG. 15 (B) is a cross-sectional view of yet another example of a vessel in a cover-sealed state.

### Description of the Invention

In the vessel (container) of the present invention, the cover body containing portion is cylindrical tubular and the cover body is cylindrical columnar, two sealing positions are placed at positions opposed to each other in a radial direction of the cover body in the cover body, and an inner diameter X of the cover body containing portion in a direction perpendicular to an axial direction of the cover body containing portion and an outer diameter Y of the cover body in a radial direction at the two sealing positions satisfy a relationship of Y > X. Preferably, the inner diameter X and the outer diameter Y satisfy a relationship of X < Y < 1.5. When the relationship of X<Y<1.5 is satisfied, in the vessel of the present invention, the cover body has outward pressure-contact with the cover body containing portion at the sealing positions, rotation of the cover body is facilitated, and good sealing ability and operability can be achieved.

In the vessel of the present invention, the number of the sealing positions is preferably two although it is not particularly limited. Further, in the vessel of the present invention, the shape of the sealing position is preferably a convex, which fits into the upper open-end, or a thin plate.

The vessel has a ribbed surface at an inner peripheral surface of the cover body containing portion adjacent to the upper open-end.

Preferably, in the vessel of the present invention, a rotation operating portion for rotationally operating the cover body is formed at at least one end of the cover body. Preferably, in the vessel of the present invention, the rotation operating portion is formed linearly.

In the vessel of the present invention, a holding portion may be formed at an outer peripheral surface of the cover body containing portion.

In the vessel of the present invention, a rotation adjusting portion, which is made by notching a part of a peripheral edge into strips, may be formed at at least one end of the cover body containing portion, a stopping portion may be formed on an outer peripheral surface at at least one end of the cover body, and the stopping portion may be rotationally movable only within the rotation adjusting portion during a rotational operation of the cover body.

In the vessel of the present invention, a latching portion may be formed at a part of an outer peripheral edge at one end of the cover body.

Preferably, in the vessel of the present invention, an opening and closing recognizing portion is formed at at least one end of the cover body. When such opening and closing recognizing portion is formed, for example, an autoanalyzer can recognize opening and closing of the vessel.

Preferably, in the vessel of the present invention, the vessel body and the cover body are made of plastic.

The analysis vessel of the present invention uses the vessel of the present invention. The analysis vessel of the present invention may be an analysis vessel for use in a gene analysis, for example. The gene analysis is not particularly limited, and examples thereof include PCR reaction and the like.

### Examples

The present invention is explained with Examples. However, the present invention is not limited by the following Examples.

### Example 1

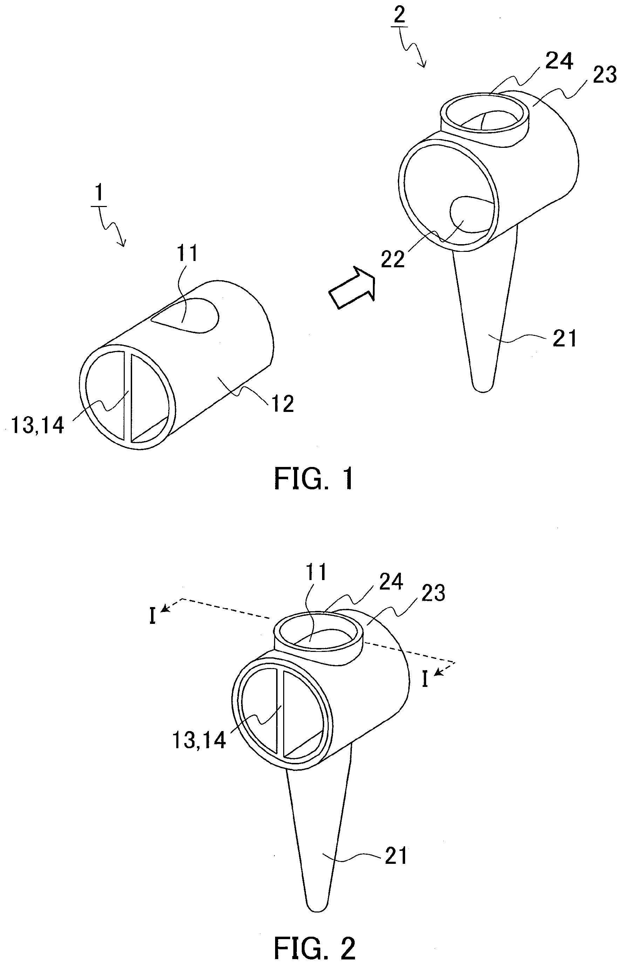

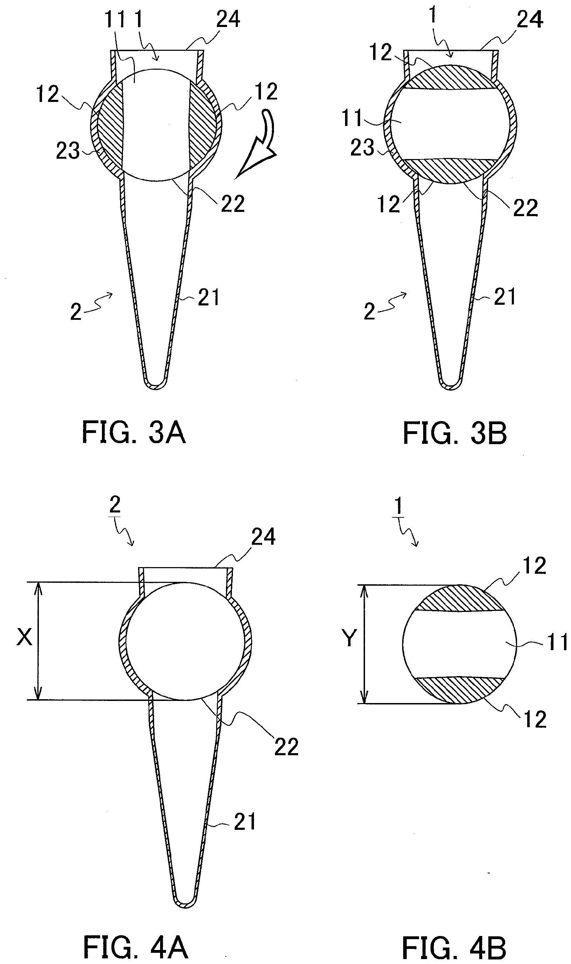

An example of a vessel is shown in FIGs. 1 to 4. FIG. 1 is an exploded perspective view of a vessel of Example 1. FIG. 2 is a perspective view of the vessel of Example 1. FIG. 3 is a cross-sectional view of the vessel of Example 1 taken along line I-I of FIG. 2. FIG. 4 (A) is a cross-sectional view of a vessel body and FIG. 4 (B) is a cross-sectional view of a cover body. In FIGs. 1 to 4, identical parts are indicated with identical numerals and symbols.

As shown in FIGs. 1 to 4, a cover body 1 is cylindrical columnar and has a through-hole 11 in a direction perpendicular to an axial direction of the cylindrical column and two sealing positions 12 placed at positions shifted from an opening of the through-hole 11 in a peripheral direction. The two sealing positions 12 are opposed to each other in a radial direction of the cover body 1. The through-hole 11 is formed so as to be placed at a position corresponding to a side wall opening portion 24 of a cover body containing portion 23 and an upper open-end 22 of a vessel main body 21 in a condition where the cover body 1 is contained in the cover body containing portion 23. The shape of the through-hole 11 is not particularly limited. Examples of the shape of the through-hole 11 include cylindrical tubular, square tubular, and the like, and cylindrical tubular is preferable. In the vessel of Example 1, the sealing position 12 is a part of an outer peripheral surface of the cover body 1. However, the sealing position 12 is not particularly limited and is applicable as long as it can seal over the upper open-end 22. The sealing position 12 may be a part of an outer peripheral surface of the cover body 1, may be formed separately as a thin plate at a part of the outer peripheral surface, or may be formed as convex that fits into the upper open-end 22, for example. The shape of the thin plate is not particularly limited, and examples thereof include rectangular, circular, and the like. The shape of the convex is not particularly limited, and examples thereof include prismatic column, cylindrical column, sphere, and the like. When the sealing position is formed as the thin plate, the convex, or the like, the vessel can increase its sealing ability. Further, in the vessel of Example 1, a rotation operating portion 13 is formed at one end of the cover body 1. As shown in FIGs. 1 and 2, the rotation operating portion 13 is formed by making a hole at the end of the cover body 1 while leaving a linear part. In FIGs. 1 and 2, the numeral 14 indicates a linear rotation operating portion. The shape of the rotation operating portion 13 is not particularly limited. Examples of the shape of the rotation operating portion 13 include a protruding portion and a grooved portion, that have linear shape, cross shape, and the like, and the linear shape is preferable. The vessel can be opened and closed easily, without detaching and attaching a cover, by rotating the rotation operating portion 13 around the axial direction of the cylindrical columnar cover body by using a rotation portion of an autoanalyzer, for example. Further, the rotation operating portion 13 can be used as the opening and closing recognizing portion. In this case, an autoanalyzer, which uses the vessel as an analysis vessel, includes a rotation portion for rotating the rotation operating portion 13, and a state of opening and closing of the vessel may be estimated by a rotational angle of the rotation operating portion 13, for example.

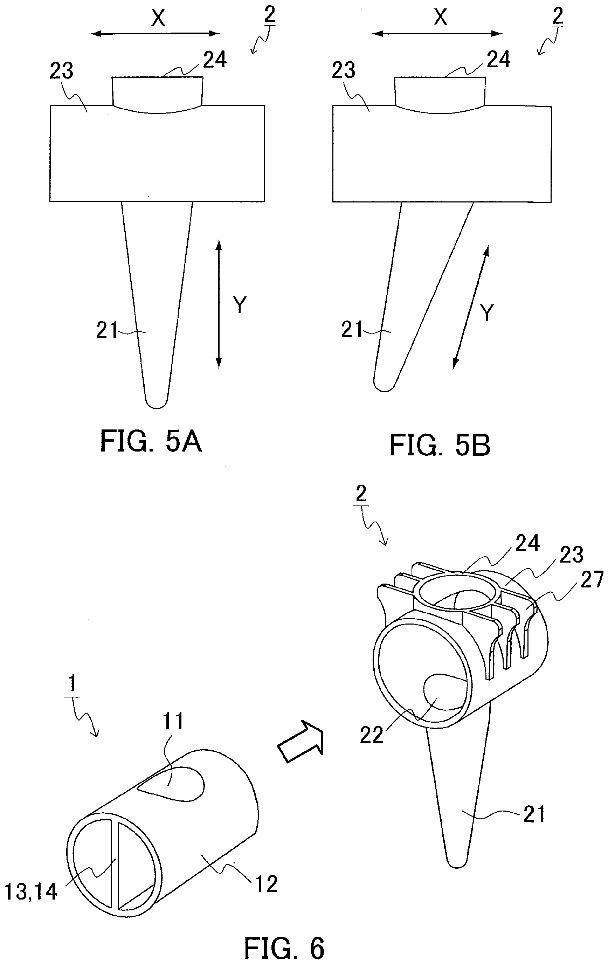

As shown in FIGs. 1 to 4, a vessel body 2 includes the vessel main body 21 that is tubular and has an upper open-end and a lower closed-end, and the cover body containing portion 23 that is cylindrical tubular and having at least one open-end. The vessel main body 21 and the cover body containing portion 23 are combined by placing the cover body containing portion 23 at the upper open-end 22 of the vessel main body 21 in a condition where an axial direction of the vessel main body 21 is approximately perpendicular to an axial direction of the cover body containing portion 23. The axial direction of the vessel main body 21 is approximately perpendicular to the axial direction of the cover body containing portion 23. It is applicable as long as the axial direction of the vessel main body 21 is practically perpendicular to the axial direction of the cover body containing portion 23, and the axial direction of the vessel main body 21 perfectly may be perpendicular or may not be perfectly perpendicular to the axial direction of the cover body containing portion 23. An example of a vessel body is shown in FIG. 5. In FIG. 5, an arrow X indicates the axial direction of the cover body containing portion 23 and an arrow Y indicates the axial direction of the vessel main body 21. FIG. 5 (A) is a side view of the vessel body 2 in which the axial direction X of the cover body containing portion 23 is approximately perfectly perpendicular to the axial direction Y of the vessel main body 21. FIG. 5 (B) is a side view of the vessel body 2, in which the axial direction X of the cover body containing portion 23 is practically perpendicular to the axial direction Y of the vessel main body 21 although the axial direction Y of the vessel main body 21 is inclined a little. In FIGs. 5 (A) and 5 (B), identical parts to those shown in FIGs.1 to 4 are indicated with identical numerals and symbols.

As shown in FIGs. 1 to 4, in the vessel of Example 1, the vessel main body 21 has a shape that tapers downwardly. The shape of the vessel main body 21 is tubular, and examples of the tubular include cylindrical tubular, square tubular, and the like. For example, the vessel main body 21 may have a shape that tapers downwardly. The shape of the cover body containing portion 23 is cylindrical tubular. Further, the shape of the upper open-end 22 of the vessel main body 21 is not particularly limited. Examples of the shape of the upper open-end 22 of the vessel main body 21 include circular, rectangular, rhombic, elliptical, and the like, and circular is preferable. In the vessel body 2, an inside of the vessel main body 21 is communicated with an inside of the cover body containing portion 23 through the upper open-end 22, and a side wall opening portion 24 is formed at a side wall of the cover body containing portion 23 over the upper open-end 22 of the vessel main body 21. For example, the side wall opening portion 24 is an opening for introducing and discharging a sample, a reagent, and the like.
The shape of the side wall opening portion 24 is not particularly limited. Examples of the shape of the side wall opening portion 24 include circular, rectangular, and the like, and circular is preferable.

As shown in FIGs. 4 (A) and 4 (B), X is a length of an inner diameter of the cover body containing portion 23 in a direction perpendicular to the axial direction of the cover body containing portion 23, and Y is a length of an outer diameter of the cover body 1 in a radial direction at the two sealing positions 12. In the vessel of Example 1, X and Y satisfy the relationship of Y = X × 1.04. As described above, the vessel is configured such that Y is slightly larger than X. The length of Y is, for example, in the range of X<Y<1.5X, and preferably in the range of 1.02X < Y < 1.06X.

In Example 1, the material of the vessel body 2 and the cover body 1 is polypropylene. The material of the vessel body 2 and the cover body 1 is not limited to the material of Example 1, and an example thereof includes plastic. Preferably, plastic has a property of flexibility or elasticity, or both properties. Examples of the plastic having the aforementioned properties include polypropylene, polyethylene, polystyrene, polytetrafluoroethylene, and the like. By using the plastic having the aforementioned properties, the vessel can obtain higher sealing ability.

In the vessel of Example 1, capacity of the vessel main body 21 is 0.5 mL. Capacity of the vessel main body is not limited to the capacity of Example 1. The capacity of the vessel main body 21 is, for example, in the range of 0.0001 mL to 100 mL, preferably in the range of 0.01 mL to 10 mL, and more preferably in the range of 0.1 mL to 2 mL.

For example, the vessel of Example 1 is used as follows.

As shown in FIGs. 1 to 4, in the vessel of Example 1, the cover body 1 is coaxially and rotatably inserted into an inside of the cover body containing portion 23 from an opening at one end thereof in a condition where an outer peripheral surface of the cover body 1 is in contact with an inner peripheral surface of the cover body containing portion 23. FIG. 3 (A) shows a cover-opened state in which an inside of the vessel main body 21 is communicated with the side wall opening portion 24 through the through-hole 11. From the cover-opened state shown in FIG. 3 (A), the cover body 1 is rotated by the rotation operating portion 13 (not shown), one of the sealing positions 12 is moved below the side wall opening portion 24 and the other of the sealing positions 12 is moved above the upper open-end 22 of the vessel main body 21, and thereby the inside of the vessel main body 21 is sealed from the outside. Further, from a sealed state (a cover-closed state) shown in FIG. 3 (B), the cover body 1 is rotated by the rotation operating portion 13 (not shown), one end of the through-hole 11 is moved below the side wall opening portion 24 and the other end of the through-hole 11 is moved above the upper open-end 22 of the vessel main body 21, the inside of the vessel main body 21 is communicated with the side wall opening portion 24 through the through-hole 11, and thereby the vessel of Example 1 becomes the cover-opened state (see FIG. 3 (A)). As described above, the vessel is configured such that Y, which is the length of an outer diameter of the cover body in a radial direction at the two sealing positions, is slightly longer than X, which is the length of an inner diameter of the cover body containing portion in a direction perpendicular to the axial direction of the cover body containing portion. Therefore, in the sealed state, the upper open-end and the side wall opening portion have outward pressure-contact with the two sealing positions. Because of this outward pressure-contact, the vessel can obtain higher sealing ability.

In this manner, the vessel of Example 1 is provided with the aforementioned structure, configured such that the outer diameter Y is larger than the inner diameter X, and utilizes the property of flexibility or elasticity, or both properties. Thereby, the vessel can be opened and closed easily, and achieves higher sealing ability. Further, since the vessel of Example 1 does not require a sealing member such as packing and the like, the number of components and the manufacturing cost can be reduced. Moreover, since the vessel of Example 1 can be opened and closed only by rotational operation of the rotation operating portion 13, it is applicable to an autoanalyzer.

### Example 2

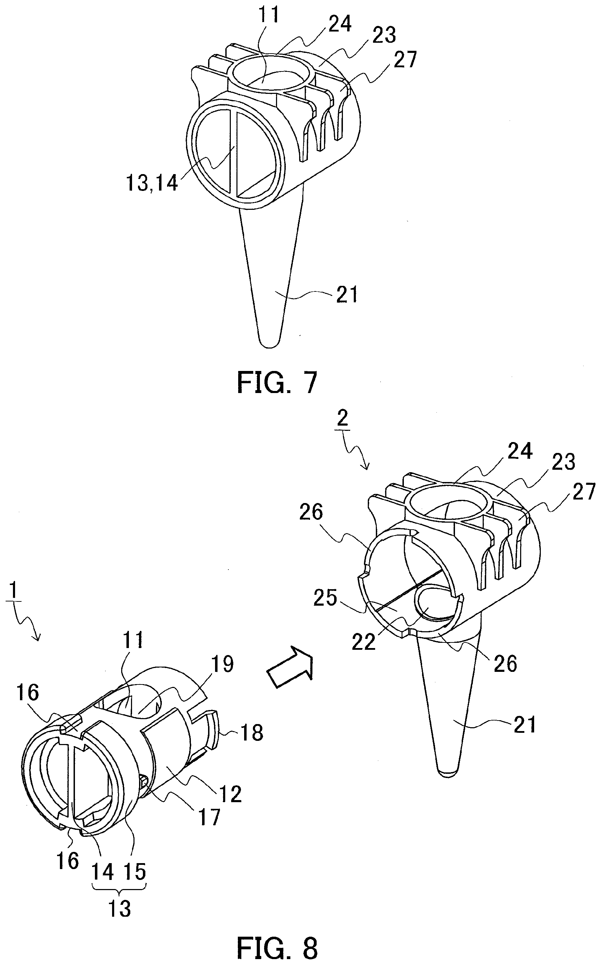

Another example of a vessel is shown in FIGs. 6 and 7. FIG. 6 is an exploded perspective view of the vessel of Example 2. FIG. 7 is a perspective view of the vessel of Example 2. In FIGs. 6 and 7, identical parts to those shown in FIGs.1 to 5 are indicated with identical numerals and symbols.

As shown in FIGs. 6 and 7, in the vessel of Example 2, plural plate-like holding portions 27 are formed in a vertical direction at an outer peripheral surface of the cover body containing portion 23 adjacent to the side wall opening portion 24. Other than these, the structure and the usage pattern of the vessel of Example 2 are similar to those of the vessel of Example 1. Since the vessel of Example 2 includes the holding portions 27, it easily can be held by an analyzer or a human hand, and thereby the vessel easily can be attached to or detached from the analyzer. In the vessel of Example 2, in the same manner as in Example 1, the number of the sealing positions 12 is two. However, the number of the sealing positions is not limited to two.

The shape of the holding portion 27 is not particularly limited, and examples thereof include a plate shape, and the like. As in Example 2, when the plate-like holding portion 27 is used, a heat releasing area of the vessel is increased, and temperature control can be performed precisely in analysis with temperature change such as PCR, and the like.

### Example 3

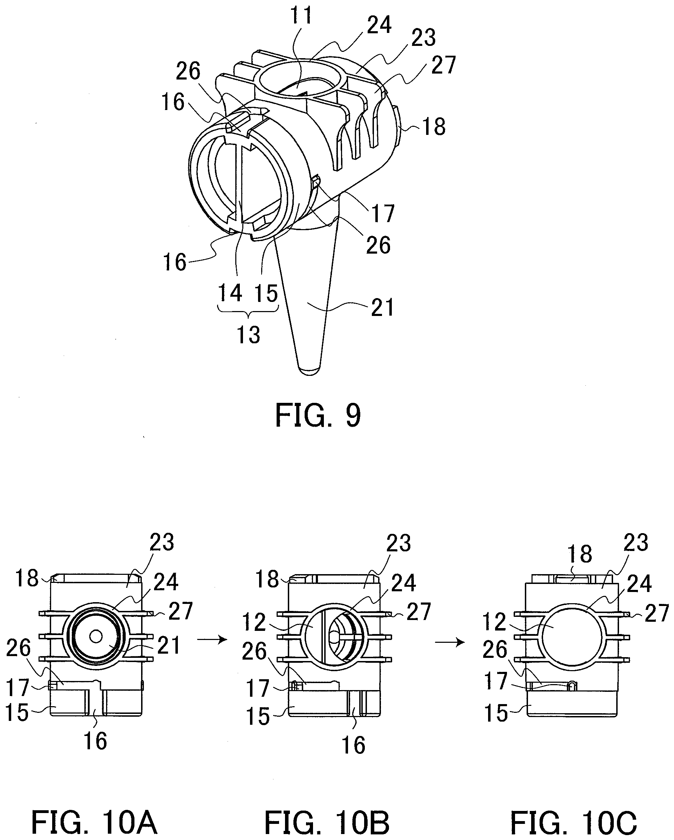

An example of a vessel of the present invention is shown in FIGs. 8 and 9. FIG. 8 is an exploded perspective view of the vessel of Example 3. FIG. 9 is a perspective view of the vessel of Example 3. In FIGs. 8 and 9, identical parts to those shown in FIGs. 1 to 7 are indicated with identical numerals and symbols.

As shown in FIGs. 8 and 9, in the vessel of Example 3, a rotation operating ring 15, an opening and closing recognizing portion 16 (an apparatus switch), a stopping portion 17, a latching portion 18, and a support plate 19 further are arranged on the cover body 1. The sealing position 12 is formed as a thin plate, and a ribbed surface 25 and a rotation adjusting portion 26 are further arranged on the vessel body 2. Other than these, the structure of the vessel of Example 3 is similar to that of the vessel of Examples 1 and 2. Further, the usage pattern of the vessel of Example 3 is similar to that of the vessel of Examples 1 and 2 except for the usage pattern described below.

In the cover body 1 of Example 3, the rotation operating ring 15 is formed as the rotation operating portion 13 in addition to the linear rotation operating portion 14. The rotation operating ring 15 is provided around the outer peripheral edge of the cover body 1 at one end, and is in contact with one end of the cover body containing portion 23 when the cover body 1 is inserted into the cover body containing portion 23. Further, with respect to the rotation operating ring 15, two concaved opening and closing recognizing portions 16 are formed by symmetrically notching a part of the outer peripheral edge. In the vessel of the present invention, the shape of the opening and closing recognizing portion 16 is not particularly limited, and examples thereof include a convex shape, a concave shape, and the like. Further, the number of the opening and closing recognizing portions 16 is not particularly limited, and it may be one or more than one. In the vessel of Example 3, the latching portion 18 is formed on the cover body 1 at the other side of the rotation operating ring 15 such that the outer peripheral edge of the cover body 1 is cut at two positions, and an end portion between the insections is outwardly protruded. Two latching portions 18 are provided symmetrically at the outer peripheral edge (only one latching portion 18 is shown in FIGs. 8 and 9). In a condition where the cover body 1 is contained in the cover body containing portion 23, a protruding portion of the latching portion 18 is latched movably along the outer peripheral edge at one end of the cover body containing portion 23. Thereby, the cover body 1 can be rotated stably without shifting positions of the through-hole 11, the side wall opening portion 24, and the upper open-end 22 in a horizontal direction. Further, on the outer peripheral surface of the cover body 1 at one end, two stopping portions 17 are symmetrically formed being in contact with the rotation operating ring 15 (only one stopping portion 17 is shown in FIGs. 8 and 9). Moreover, in the inside of the cover body 1 except for the through-hole 11, in order to increase physical strength of the cover body 1, a support plate 19 is arranged. In the vessel of Example 3, as in Examples 1 and 2, the number of the sealing positions 12 is two. However, in the vessel of the present invention, the number of the sealing positions is not limited to two. Further, in the vessel of Example 3, the number of the latching portions 18 and the number of the stopping portions 17 are two. However, in the vessel of the present invention, the number of the latching portions and the number of the stopping portions are not limited to two.

In the vessel body 2 of Example 3, two rotation adjusting portions 26 are formed. The rotation adjusting portion 26 is formed by notching 1/4 of both peripheral edges of the cover body containing portion 23 into strips. In the vessel of the present invention, the number of the rotation adjusting portions is not particularly limited, and it may be one or more than one, for example. Further, in the vessel body 2 of Example 3, at an inner peripheral surface of the cover body containing portion 23 adjacent to the upper open-end 22, a slightly raised ribbed surface 25 is formed parallel to the axial direction. In the sealed state, the sealing positions 12 have outward pressure-contact with the ribbed surface 25, and thereby the vessel of Example 3 further can obtain higher sealing ability and strength. In the vessel of the present invention, the ribbed surface is not limited to be formed at the inner peripheral surface of the cover body containing portion adjacent to the upper open-end, and further may be formed at an inner peripheral surface of the cover body containing portion adjacent to the side wall opening portion, for example. When the ribbed surface also is formed at the side of the side wall opening portion, the vessel of the present invention can obtain higher sealing ability and strength.

For example, the vessel of Example 3 is used as follows.

As shown in FIGs. 8 and 9, the cover body 1 is inserted rotatably into an inside of the cover body containing portion 23 from one end thereof.

FIG. 10 is a top view of the vessel in the cover-opened state, in the cover-closed state, and a halfway of a process of opening and closing. FIG. 10 (A) is a top view of the vessel when the cover is opened. FIG. 10 (B) is a top view of the vessel at the halfway of the process of opening and closing. FIG. 10 (C) is a top view of the vessel when the cover is sealed. In FIG. 10 (A), the upper open-end 22 is communicated with the side wall opening portion 24 through the through-hole 11, and the vessel is opened. Further, in FIG. 10 (A), the stopping portion 17 is arranged at a left end of the rotation adjusting portion 26, and is movable in rightward direction (clockwise direction viewed from the side of the rotation operating ring 15) in FIG. 10 (A). As shown in FIG. 10 (B), by rotating clockwise the linear rotation operating portion 14 (not shown) or the rotation operating ring 15, the through-hole 11 formed on the cover body 1 is rotated clockwise. Because of this rotation, one of the two sealing positions 12 begins to cover the side wall opening portion 24. As shown in FIG. 10 (C), when the cover body 1 is rotated 90 degrees (1/4 of the whole circumference of the cover body 1), the two sealing positions 12 respectively seal the upper open-end 22 (not shown) and the side wall opening portion 24 at the same time, and thereby the vessel is sealed. When the vessel is sealed, the stopping portion 17 reaches a right end of the rotation adjusting portion 26. Therefore, the cover body 1 does not further rotate clockwise. In this manner, in the vessel of Example 3, by providing the rotation adjusting portion 26 and the stopping portion 17 as described above, a rotational operation is limited to 90 degrees, and switching between the complete cover-opened state and the complete cover-sealed state can be easily performed. Therefore, an autoanalyzer using the vessel of Example 3 can automatically open and close the vessel only by providing with a mechanism for rotatably operating the linear rotation operating portion 14 as a vessel opening and closing mechanism.

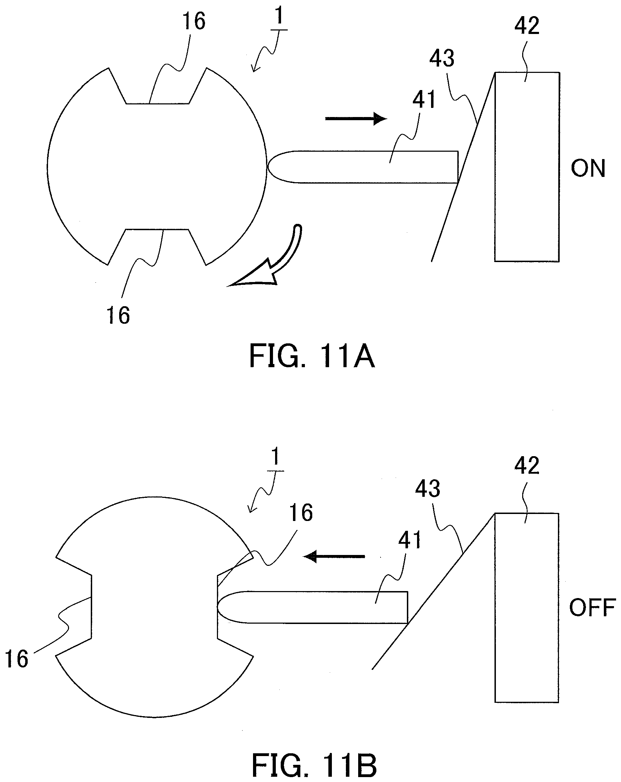

In the vessel of Example 3, when the two opening and closing recognizing portions 16 are positioned in a vertical direction (an up-and-down direction), it is referred to as a cover-opened state, and when the two opening and closing recognizing portions 16 are positioned in a horizontal direction (right and left direction), it is referred to as a cover-sealed state. That is, the autoanalyzer using the vessel of Example 3 can use the positions of the two opening and closing recognizing portions 16 as a signal for opening and closing of the vessel. Therefore, when the autoanalyzer is provided with a mechanism for recognizing positions of the concaved opening and closing recognizing portions 16 and a mechanism for estimating the opened and closed state of the vessel from the aforementioned positions, the autoanalyzer can recognize the opened and closed state of the vessel. FIG. 11 shows schematic views of an example of the relationship between the opening and closing recognizing portions 16 of the cover body 1 and the recognizing mechanism of the autoanalyzer. FIG. 11 (A) is a schematic view of the vessel in a state where a cover is recognized to be opened. FIG. 11 (B) is a schematic view in a state where the cover is recognized to be sealed. In FIGs. 11 (A) and 11 (B), the vessel body 1 is viewed from a rotational axis direction. An arrow in a rotational direction in FIG. 11 (A) shows a rotational direction of the cover body 1. Further, arrows in the right and left directions in FIGs. 11 (A) and 11 (B) indicate a moving direction of a terminal 41 of the autoanalyzer. In the vessel of Example 3, as shown in FIG. 11 (A), when the opening and closing recognizing portions 16 are positioned in the vertical direction (up-and-down direction), the terminal 41 of the autoanalyzer is pushed by the cover body 1 and moved rightward in FIG. 11 (A). Therefore, a leaf spring 43 is pressed and a switch 42 of the autoanalyzer is turned on. Further, as shown in FIG. 11 (B), when the opening and closing recognizing portions 16 are positioned in the horizontal direction (right and left direction), the terminal 41 of the autoanalyzer is fitted into the concaved opening and closing recognizing portions 16 and is moved leftward in FIG. 11 (B). Therefore, the leaf spring 43 is released from a compressed state and the switch 42 of the autoanalyzer is turned off. The relationship between ON and OFF may be reversed. In the vessel of the present invention, the relationship between the opening and closing recognizing portions 16 and the recognizing mechanism of the autoanalyzer is not limited to this example.

### Example 4

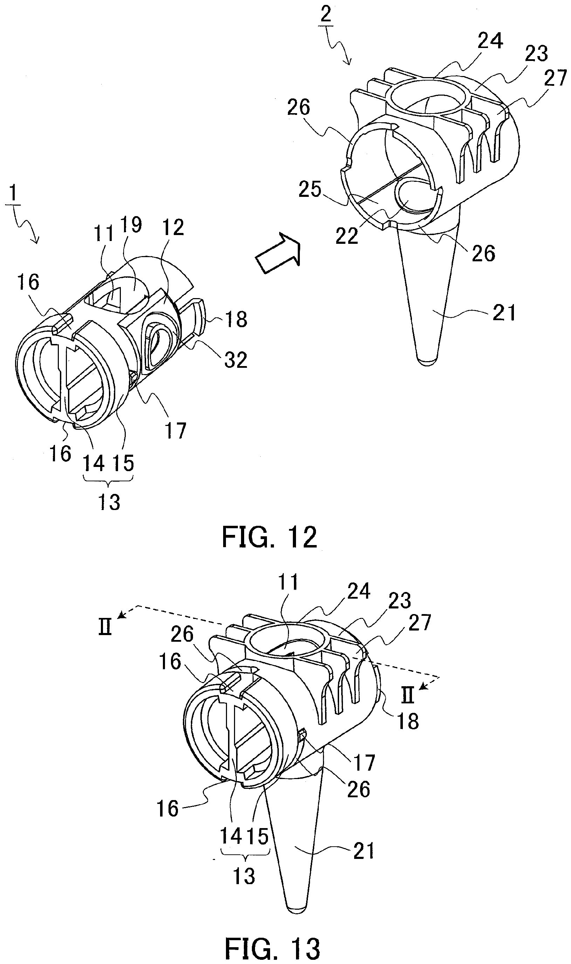

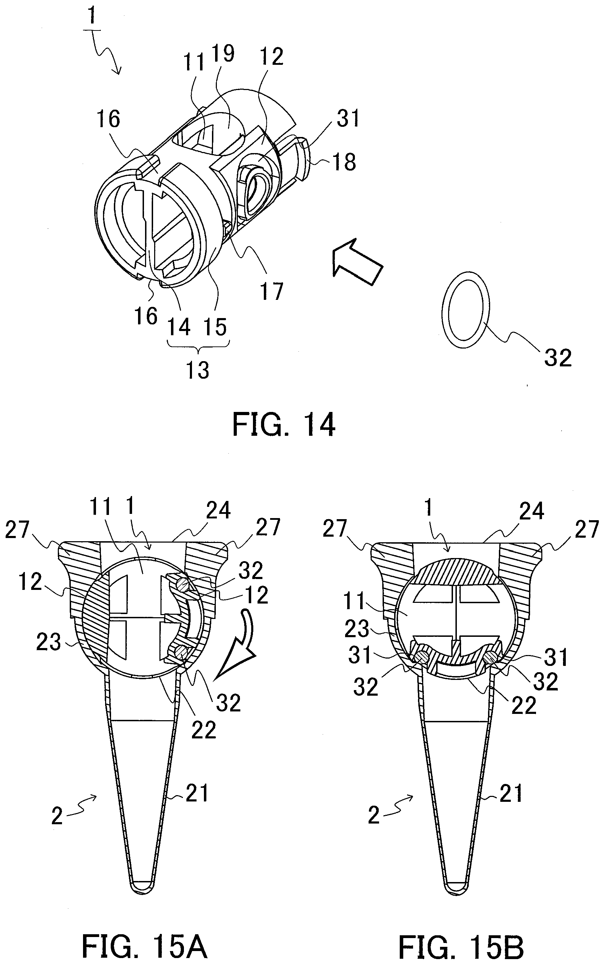

Another example of a vessel is shown in FIGs. 12 to 15. FIG. 12 is an exploded perspective view of the vessel of Example 4. FIG. 13 is a perspective view of the vessel of Example 4. FIG. 14 is a perspective view of a cover body 1 of the vessel of Example 4 before attaching an O ring 32. FIG. 15 is cross-sectional views of the vessel of Example 4 taken along line II to II of FIG. 13. In FIGs. 12 to 15, identical parts to those shown in FIGs.1 to 11 are indicated with identical numerals and symbols.

As shown in FIGs. 12 to 15, in the vessel of Example 4, an annular groove 31 further is formed at the sealing position 12 of the cover body 1, and an O ring 32 being a circular ring is attached to the annular groove 31. The annular groove 31 is formed to be placed at a position surrounding around the upper open-end 22 at the time of sealing. Other than these, the structure of the vessel of Example 4 is similar to that of the vessel of Examples 1 to 3. Further, the usage pattern of the vessel of Example 4 is similar to that of the vessel of Examples 1 to 3 except for the usage pattern described below. The number of annular grooves 31 is not particularly limited, and it may be one or more than one, for example. The material of the O ring 32 is not particularly limited, and examples thereof include nitrile rubber, fluorine-containing rubber, silicone rubber, Teflon (registered trademark), and the like.

For example, the vessel of Example 4 is used as follows.

As shown in FIGs. 13 and 14, the cover body 1 is rotatably inserted into an inside of the cover body containing portion 23 from one end thereof.

FIG. 15 (A) is a cross-sectional view of the vessel of Example 4 in the cover-opened state. FIG. 15 (B) is a cross-sectional view of the vessel of Example 4 in the cover-sealed state. In FIG. 15 (A), the upper open-end 22 is communicated with the side wall opening portion 24 through the through-hole 11, and the vessel is opened. As shown in FIG. 13(B), by rotating clockwise the rotation operating portion 13 (not shown), the sealing position 12 formed on the cover body 1 is rotated clockwise. Because of this rotation, the sealing position 12 at which the annular groove 31 is formed is moved above the upper open-end 22, and the O ring 32 attached to the annular groove 31 is closely in contact with an inner peripheral surface of the cover body containing portion 23. Thereby the vessel of Example 4 is sealed (see FIG. 15 (B)). In the cover-sealed state, when the O ring 32 is closely in contact with the inner peripheral surface of the cover body containing portion 23, the vessel of Example 4 can obtain higher sealing ability.

As described above, since the vessel of Example 4 is provided with the aforementioned structure in addition to the structure of Example 3, the vessel can increase the sealing ability.

### Industrial Applicability

When the vessel of the present invention is used, the vessel can easily be opened and closed without detaching and attaching the cover. Therefore, the vessel of the present invention is easily applicable to an autoanalyzer. The vessel of the present invention is also excellent in sealing ability. Therefore, the intended use of the vessel of the present invention is not limited and it can be applied suitably to a broad range of technical fields such as genetic engineering, biochemistry, physics and chemistry, medical science, and the like.

## Claims

1. A vessel comprising:
a vessel body (2); and
a cover body (1),
wherein the vessel body (2) comprises:
a vessel main body (21) being tubular and having an upper open-end (22) and a lower closed-end; and
a cover body containing portion (23) being cylindrical tubular and having at least one open-end,
wherein the cover body containing portion (23) is at the upper open-end (22) of the vessel main body (21) and the vessel main body (21) and the cover body containing portion (23) are arranged such that an axial direction of the vessel main body (21) is approximately perpendicular to an axial direction of the cover body containing portion (23),
wherein an inside of the vessel main body (21) is in communication with an inside of the cover body containing portion (23) through the upper open-end (22),
wherein an opening portion (24) is provided at a side wall of the cover body containing portion (23) over the upper open-end (22) of the vessel main body (21),
wherein the cover body (1) is cylindrical columnar and has a through-hole in a direction perpendicular to an axial direction of the column, and two sealing portions (12) at positions opposed to each other in a radial direction of the cover body (1) and shifted from an opening of the through-hole (11) in a peripheral direction,
wherein the cover body (1) is coaxially and rotatably containable in an inside of the cover body containing portion (23) in a condition where an outer peripheral surface of the cover body (1) is in contact with an inner peripheral surface of the cover body containing portion (23),
wherein the through-hole (11) of the cover body (1) is at a position corresponding to the side wall opening portion (24) of the cover body containing portion (23) and the upper open-end of the vessel main body in a condition where the cover body (1) is contained in the cover body containing portion (23),
wherein in a condition where the cover body (1) is contained in the cover body containing portion (23), when the cover body (1) is rotated and one end of the through-hole (11) is placed below the side wall opening portion (24) and the other end of the through-hole (11) is placed above the upper open-end (22) of the vessel main body (21), the inside of the vessel main body (21) is communicated with the side wall opening portion (24) through the through-hole (11),
wherein, when the cover body (1) is rotated and the sealing portion (12) is placed over the upper open-end (22) of the vessel main body (21), the inside of the vessel main body (21) is sealed from the outside, **characterized in that** an inner diameter X of the cover body containing portion (23) in a direction perpendicular to the axial direction of the cover body containing portion (23), and an outer diameter Y of the cover body (1) in the radial direction at the two sealing portions (12), satisfy a relationship of Y > X, and
wherein the vessel comprises a ribbed surface (25) at an inner peripheral surface of the cover body containing portion (23) adjacent to the upper open-end (22).

2. The vessel according to claim 1, wherein the sealing portion has a convex shape, which fits into the upper open-end (22), or has a thin plate shape.

3. The vessel according to claim 1, wherein the inner diameter X of the cover body containing portion (23) and the outer diameter Y of the cover body (1) in a radial direction at the two sealing portions satisfy a relationship of X < Y < 1.5X.

4. The vessel according to claim 1, wherein a rotation operating portion (13, 14) for rotationally operating the cover body (1) is provided at at least one end of the cover body (1).

5. The vessel according to claim 4, wherein the rotation operating portion (14) is linear.

6. The vessel according to claim 1, wherein a holding portion (27) is provided at an outer peripheral surface of the cover body containing portion (23).

7. The vessel according to claim 1, further comprising a rotation adjusting portion (26), having a notch in part of a peripheral edge at at least one end of the cover body containing portion (23), and a stopping portion (17) on an outer peripheral surface at at least one end of the cover body (1), and wherein the stopping portion (17) is rotationally movable only within the rotation adjusting portion (26) during a rotational operation of the cover body (1).

8. The vessel according to claim 1, wherein a latching portion (18) is provided on a part of an outer peripheral edge at one end of the cover body (1).

9. The vessel according to claim 1, wherein an opening and closing recognizing portion (16) is provided at at least one end of the cover body (1).

10. The vessel according to claim 1, wherein the vessel body (2) and the cover body (1) are made of plastic.

11. Use of a vessel according to any of claims 1 to 10 in an analysis.

12. The use of the vessel according to claim 11, wherein the analysis is a gene analysis.

13. The use of the vessel according to claim 12, wherein the gene analysis is an analysis by PCR.

## Patentansprüche

1. Behälter, der Folgendes umfasst:
einen Behälterkörper (2) und
einen Abdeckkörper (1),
wobei der Behälterkörper (2) Folgendes umfasst:
einen Behälterhauptkörper (21), der rohrförmig ist und ein oberes offenes Ende (22) und ein unteres geschlossenes Ende aufweist; und
einen Abdeckkörper-Aufnahmeabschnitt (23), der zylindrisch rohrförmig ist und mindestens ein offenes Ende aufweist,
wobei sich der Abdeckkörper-Aufnahmeabschnitt (23) am oberen offenen Ende (22) des Behälterhauptkörpers (21) befindet und der Behälterhauptkörper (21) und der Abdeckkörper-Aufnahmeabschnitt (23) so angeordnet sind, dass eine axiale Richtung des Behälterhauptkörpers (21) annähernd senkrecht zu einer axialen Richtung des Abdeckkörper-Aufnahmeabschnitts (23) verläuft,
wobei ein Inneres des Behälterhauptkörpers (21) mit dem Inneren des Abdeckkörper-Aufnahmeabschnitts (23) durch das obere offene Ende (22) in Verbindung steht,
wobei ein Öffnungsabschnitt (24) an einer Seitenwand des Abdeckkörper-Aufnahmeabschnitts (23) über dem oberen offenen Ende (22) des Behälterhauptkörpers (21) vorgesehen ist,
wobei der Abdeckkörper (1) zylindrisch säulenförmig ist und Folgendes aufweist: ein Durchgangsloch in einer Richtung senkrecht zu einer axialen Richtung der Säule und zwei Dichtungsabschnitte (12) an Positionen, die einander in einer radialen Richtung des Abdeckkörpers (1) gegenüberliegen und von einer Öffnung des Durchgangslochs (11) in einer Umfangsrichtung verschoben sind,
wobei der Abdeckkörper (1) koaxial und drehbar in einem Inneren des Abdeckkörper-Aufnahmeabschnitts (23) in einem Zustand enthalten sein kann, bei dem eine äußere Umfangsfläche des Abdeckkörpers (1) mit einer inneren Umfangsfläche des Abdeckkörper-Aufnahmeabschnitts (23) in Kontakt ist,
wobei sich das Durchgangsloch (11) des Abdeckkörpers (1) an einer Position befindet, die dem SeitenwandÖffnungsabschnitt (24) des Abdeckkörper-Aufnahmeabschnitts (23) und dem oberen offenen Ende des Behälterhauptkörpers in einem Zustand entspricht, bei dem der Abdeckkörper (1) in dem Abdeckkörper-Aufnahmeabschnitt (23) enthalten ist,
wobei in einem Zustand bei dem der Abdeckkörper (1) in dem Abdeckkörper-Aufnahmeabschnitt (23) enthalten ist, wenn der Abdeckkörper (1) gedreht wird und ein Ende des Durchgangslochs (11) unterhalb des Seitenwandöffnungsabschnitts (24) angeordnet ist und das andere Ende des Durchgangslochs (11) oberhalb des oberen offenen Endes (22) des Behälterhauptkörpers (21) angeordnet ist, das Innere des Behälterhauptkörpers (21) mit dem Seitenwandöffnungsabschnitt (24) durch das Durchgangsloch (11) verbunden ist,
wobei, wenn der Abdeckkörper (1) gedreht wird und der Dichtungsabschnitt (12) über dem oberen offenen Ende (22) des Behälterhauptkörpers (21) angeordnet ist, das Innere des Behälterhauptkörpers (21) von außen abgedichtet ist,
**dadurch gekennzeichnet, dass** ein Innendurchmesser X des Abdeckkörper-Aufnahmeabschnitts (23) in einer Richtung senkrecht zur axialen Richtung des Abdeckkörper-Aufnahmeabschnitts (23) und ein Außendurchmesser Y des Abdeckkörpers (1) in radialer Richtung an den beiden Dichtungsabschnitten (12) eine Beziehung von Y > X erfüllen,
und wobei der Behälter eine gerippte Oberfläche (25) an einer inneren Umfangsfläche des Abdeckkörper-Aufnahmeabschnitts (23) benachbart zu dem oberen offenen Ende (22) umfasst.

2. Behälter nach Anspruch 1, wobei der Dichtungsabschnitt eine konvexe Form aufweist, die in das obere offene Ende (22) passt oder eine dünne Plattenform aufweist.

3. Behälter nach Anspruch 1,wobei der Innendurchmesser X des Abdeckkörper-Aufnahmeabschnitts (23) und der Außendurchmesser Y des Abdeckkörpers (1) in radialer Richtung an den beiden Dichtungsabschnitten eine Beziehung von X < Y < 1,5 X erfüllen.

4. Behälter nach Anspruch 1,wobei an mindestens einem Ende des Abdeckkörpers (1) ein Drehbetätigungsabschnitt (13, 14) zum drehbaren Betätigen des Abdeckkörpers (1) vorgesehen ist.

5. Behälter nach Anspruch 4, wobei der Drehbetätigungsabschnitt (14) linear ist.

6. Behälter nach Anspruch 1, wobei ein Halteabschnitt (27) an einer äußeren Umfangsfläche des Abdeckkörper-Aufnahmeabschnitts (23) vorgesehen ist.

7. Behälter nach Anspruch 1, der ferner einen Drehverstellabschnitt (26) umfasst, der Folgendes aufweist:
eine Kerbe in einem Teil einer Umfangskante an mindestens einem Ende des Abdeckkörper-Aufnahmeabschnitts (23) undeinen Anschlagabschnitt (17) an einer äußeren Umfangsfläche an mindestens einem Ende des Abdeckkörpers (1) undwobei der Anschlagabschnitt (17) während eines Drehbetriebs des Abdeckkörpers (1) nur innerhalb des Drehverstellabschnitts (26) drehbar beweglich ist.

8. Behälter nach Anspruch 1, wobei an einem Ende des Abdeckkörpers (1) ein Rastabschnitt (18) an einem Teil einer Außenumfangskante vorgesehen ist.

9. Behälter nach Anspruch 1, wobei an mindestens einem Ende des Abdeckkörpers (1) ein Öffnungs- und Schließerkennungsabschnitt (16) vorgesehen ist.

10. Behälter nach Anspruch 1, wobei der Behälterkörper (2) und der Abdeckkörper (1) aus Kunststoff bestehen.

11. Verwendung eines Behälters nach einem der Ansprüche 1 bis 10 in einer Analyse.

12. Verwendung des Behälters nach Anspruch 11, wobei die Analyse eine Genanalyse ist.

13. Verwendung des Behälters nach Anspruch 12, wobei die Genanalyse eine Analyse durch PCR ist.

## Revendications

1. Contenant comprenant :
un corps de contenant (2) ; et
un corps de couvercle (1),
dans lequel le corps de contenant (2) comprend :
un corps principal de contenant (21) tubulaire et présentant une extrémité ouverte supérieure (22) et une extrémité fermée inférieure ; et
une partie renfermant le corps de couvercle (23) cylindrique tubulaire et présentant au moins une extrémité ouverte,
dans lequel la partie renfermant le corps de couvercle (23) est située au niveau de l'extrémité ouverte supérieure (22) du corps principal de contenant (21) et le corps principal de contenant (21) et la partie renfermant le corps de couvercle (23) sont agencés de telle sorte qu'un sens axial du corps principal de contenant (21) soit approximativement perpendiculaire à un sens axial de la partie renfermant le corps de couvercle (23),
dans lequel un intérieur du corps principal de contenant (21) est en communication avec un intérieur de la partie renfermant le corps de couvercle (23) par le biais de l'extrémité ouverte supérieure (22),
dans lequel une partie d'ouverture (24) est fournie au niveau d'une paroi latérale de la partie renfermant le corps de couvercle (23) par-dessus l'extrémité ouverte supérieure (22) du corps principal de contenant (21),
dans lequel le corps de couvercle (1) est en forme de colonne cylindrique et présente un trou débouchant dans un sens perpendiculaire a un sens axial de la colonne, et deux parties d'étanchéité (12) à des positions opposées l'une à l'autre dans un sens radial du corps de couvercle (1) et décalées d'une ouverture du trou débouchant (11) dans un sens périphérique,
dans lequel le corps de couvercle (1) peut être contenu coaxialement et de manière rotative dans un intérieur de la partie renfermant le corps de couvercle (23) dans un état où une surface périphérique externe du corps de couvercle (1) est en contact avec une surface périphérique interne de la partie renfermant le corps de couvercle (23),
dans lequel le trou débouchant (11) du corps de couvercle (1) est situé à une position correspondant à la partie d'ouverture de paroi latérale (24) de la partie renfermant le corps de couvercle (23) et l'extrémité ouverte supérieure du corps principal de contenant dans un état où le corps de couvercle (1) est contenu dans la partie renfermant le corps de couvercle (23),
dans lequel dans un état où le corps de couvercle (1) est contenu dans la partie renfermant le corps de couvercle (23), quand le corps de couvercle (1) est tourné et qu'une extrémité du trou débouchant (11) est placée en dessous de la partie d'ouverture de paroi latérale (24) et que l'autre extrémité du trou débouchant (11) est placée au-dessus de l'extrémité ouverte supérieure (22) du corps principal de contenant (21), l'intérieur du corps principal de contenant (21) est en communication avec la partie d'ouverture de paroi latérale (24) par le biais du trou débouchant (11),
dans lequel, quand le corps de couvercle (1) est tourné et que la partie d'étanchéité (12) est placée par-dessus l'extrémité ouverte supérieure (22) du corps principal de contenant (21), l'intérieur du corps principal de contenant (21) est scellé depuis l'extérieur,
**caractérisé en ce que** un diamètre interne X de la partie renfermant le corps de couvercle (23) dans un sens perpendiculaire au sens axial de la partie renfermant le corps de couvercle (23), et un diamètre externe Y du corps de couvercle (1) dans le sens radial au niveau des deux parties d'étanchéité (12), satisfont une relation de Y > X, et
dans lequel le contenant comprend une surface nervurée (25) au niveau d'une surface périphérique interne de la partie renfermant le corps de couvercle (23) adjacente à l'extrémité ouverte supérieure (22).

2. Contenant selon la revendication 1, dans lequel la partie d'étanchéité a une forme convexe, laquelle s'adapte dans l'extrémité ouverte supérieure (22), ou a une forme de plaque mince.

3. Contenant selon la revendication 1, dans lequel le diamètre interne X de la partie renfermant le corps de couvercle (23) et le diamètre externe Y du corps de couvercle (1) dans un sens radial au niveau des deux parties d'étanchéité satisfont une relation de X < Y < 1,5X.

4. Contenant selon la revendication 1, dans lequel une partie d'actionnement de rotation (13, 14) servant à actionner en rotation le corps de couvercle (1) est fournie au niveau d'au moins une extrémité du corps de couvercle (1).

5. Contenant selon la revendication 4, dans lequel la partie d'actionnement de rotation (14) est linéaire.

6. Contenant selon la revendication 1, dans lequel une partie de support (27) est fournie au niveau d'une surface périphérique externe de la partie renfermant le corps de couvercle (23).

7. Contenant selon la revendication 1, comprenant en outre une partie d'ajustement de rotation (26), présentant une encoche dans une partie d'un bord périphérique au niveau de l'au moins extrémité de la partie renfermant le corps de couvercle (23), et une partie d'arrêt (17) sur une surface périphérique externe au niveau d'au moins une extrémité du corps de couvercle (1), et dans lequel la partie d'arrêt (17) est déplaçable en rotation uniquement à l'intérieur de la partie d'ajustement de rotation (26) durant un actionnement de rotation du corps de couvercle (1).

8. Contenant selon la revendication 1, dans lequel une partie de verrouillage (18) est fournie sur une partie d'un bord périphérique externe au niveau d'une extrémité du corps de couvercle (1).

9. Contenant selon la revendication 1, dans lequel une partie de reconnaissance d'ouverture et de fermeture (16) est fournie au niveau d'au moins une extrémité du corps de couvercle (1).

10. Contenant selon la revendication 1, dans lequel le corps de contenant (2) et le corps de couvercle (1) sont réalisés en plastique.

11. Utilisation d'un contenant selon l'une quelconque des revendications 1 à 10 dans une analyse.

12. Utilisation du contenant selon la revendication 11, dans lequel l'analyse est une analyse de gènes.

13. Utilisation du contenant selon la revendication 12, dans lequel l'analyse de gènes est une analyse par PCR.
